# EUROPÄISCHE PATENTANMELDUNG

(11) **EP 2 180 671 A1**
(43) Veröffentlichungstag der Anmeldung: **28.04.2010**
(21) Anmeldenummer: 09174229.6
(22) Anmeldetag: 27.10.2009
(51) Int. Cl.: H04M 1/56, H04M 1/57, H04M 1/725

(54) **Ermittlung zumindest eines geographischen Orts mittels Anruferlisten zur Verwendung bei ortsbezogenen Informationsdiensten**

(30) Priorität: 27.10.2008 DE 102008053352
(71) Anmelder: Gigaset Communications GmbH, 81379 München (DE)
(72) Erfinder: Többen, Wilfried, 49624, Löningen (DE)
(74) Vertreter: Michalski Hüttermann & Partner Patentanwälte

(57) **Zusammenfassung**

Die Anmeldung betrifft eine Vorrichtung und ein Verfahren welches es ermöglicht auf komfortable Weise mindest einen Ort zu ermitteln, welcher bei der Abfrage von ortsbezogenen Informationsdiensten verwendet werden kann.
Diesbezüglich wird üblicherweise der Ort manuell ausgewählt, z.B. über ein Web-Interface mit verschiedenen Eingabehilfen wie beispielsweise ein Mausclick auf einer Landkarte. Der Anmeldung liegt die Idee zu Grunde, dass die manuelle Eingabe vermieden werden kann, dadurch dass man das telefonische
Kommunikationsverhalten eines Benutzers auswertet. Insbesondere die Rufnummer von ein- bzw. abgehenden Anrufen kann dazu verwendet werden, Orte zu ermitteln, zu denen der Benutzer einen Bezug hat und für den demzufolge Interesse hinsichtlich weitergehender Information wie beispielsweise Wettervorhersage oder Nachrichten besteht.

## Beschreibung

Die vorliegende Erfindung bezieht sich auf eine Vorrichtung und ein Verfahren zur Ortsermittlung und insbesondere auf eine Vorrichtung und ein Verfahren zur geographischen Ortsermittlung für ortsbezogene Dienste, die im Internet bzw. World Wide Web (WWW) angeboten werden. Die Erfindung betrifft weiterhin ein Kommunikationsendgerät mit einer Vorrichtung.

Das World Wide Web hat die Zugangsmöglichkeiten zu einer unvorstellbaren Menge von Informationen und Diensten revolutioniert, die in elektronischer Form als schriftliche Daten, Audio-Daten oder Bild- und Video-Daten in archivierter Form oder in Echtzeit vorliegen können.

Der Informationsaustausch innerhalb des Internets erfolgt hierbei unter einem sogenannten Client-Server-Modell. Individuelle Clients führen hierbei eine Anfrage an zentralisierte Server im Web durch, welche als Datenspeicher oder als Anbieter von Diensten (service) dienen. Herkömmliche Web-Server und insbesondere sogenannte Suchmaschinen analysieren hierbei eine Such-Anfrage und beantworten diese mit einem entsprechenden Such-Ergebnis in mehr oder weniger geordneter Form.

Mit der stark anwachsenden Menge von Dateninhalten und Diensten im Internet bzw. WWW ergeben sich jedoch immer mehr Such-Treffer, was das Auffinden eines gewünschten Dienstes stark erschwert.

Insbesondere ortsbezogene Dienste, wie z.B. ein lokaler Pizza-Service, eine lokale Wettervorhersage oder lokale Radio-und/oder TV-Stationen sowie lokale Nachrichtendienste sind in der Regel weltweit verfügbar, obwohl sie nur für Benutzer aus einer bestimmten Region bzw. für einen bestimmten Ursprungsort interessant sind. Die unendliche Vielfalt dieser angebotenen Dienste erschwert es daher dem Benutzer, die für "seine" Region bzw. "seinen" geographischen Ort relevanten Dienste zu finden.

Üblicherweise wird daher der Ort für einen jeweiligen Dienst manuell ausgewählt, z.B. über ein WEB-Interface. Dabei sind verschiedene Eingabehilfen verfügbar, wie beispielsweise Mausklick auf eine Landkarte, Eingabe einer Postleitzahl, schrittweise Verfeinerung einer Auswahl (Bundesland, Region, Stadt, Stadtteil), Eingabe des Ortsnamens, Vorschlagsliste anhand der eingegebenen Buchstaben usw. Ein Benutzerkomfort ist hierbei relativ gering.

Der Erfindung liegt daher die Aufgabe zu Grunde, eine Vorrichtung und ein Verfahren zur Ortsermittlung zu schaffen, welches einen erhöhten Benutzerkomfort bietet und auf einfache und kostengünstige Art und Weise die Ortsermittlung insbesondere für ortsbezogene Dienste ermöglicht.

Erfindungsgemäß wird diese Aufgabe hinsichtlich der Vorrichtung durch die Merkmale des Patentanspruchs 1, hinsichtlich des Kommunikationsendgerätes durch die Merkmale des Patentanspruchs 16 und hinsichtlich des Verfahrens durch die Maßnahmen des Patentanspruchs 17 gelöst.

Eine Aufzeichnungseinheit zeichnet erfindungsgemäß ein Kommunikationsverhalten für ein Kommunikationsendgerät auf, eine Auswerteeinheit wertet das aufgezeichnete Kommunikationsverhalten aus und eine Orts-Ermittlungseinheit ermittelt auf der Grundlage des ausgewerteten Kommunikationsverhaltens zumindest einen Ort. Somit kann basierend auf dem Kommunikationsverhalten eines Kommunikationsendgerätes ein relevanter Ort oder eine entsprechende geographische Ortsliste erstellt werden, welche für einen Aufruf von ortsbezogenen Diensten verwendet werden kann. Ein Benutzerkomfort wird dadurch wesentlich erhöht.

Beispielsweise kann das aufgezeichnete Kommunikationsverhalten zumindest eine Kommunikationsadresse und eine zugehörige quantifizierende Information aufweisen, wobei die Kommunikationsadresse insbesondere eine Rufnummer eines Kommunikationspartners darstellen kann und die quantifizierende Information eine zugehörige Anzahl von Kommunikationsverbindungen, eine zugehörige Zeitdauer der Kommunikationsverbindungen oder eine zugehörige Häufigkeit der Kommunikationsverbindungen mit der jeweiligen Kommunikationsadresse. Ferner kann das aufgezeichnete Kommunikationsverhalten eine Information dahingehend aufweisen, ob es sich bei der Kommunikationsverbindung um einen eingehenden Ruf oder einen ausgehenden Ruf gehandelt hat. Eine derart feinstrukturierte Aufzeichnung des Kommunikationsverhaltens ermöglicht eine vielfältige Auswertung und somit Anpassung an jeweilige Vorlieben eines Benutzers.

Ferner kann das aufgezeichnete Kommunikationsverhalten nur zustande gekommene Kommunikationsverbindungen aufweisen, wodurch ein Benutzerkomfort weiter erhöht und eine Fehleranfälligkeit aufgrund von beispielsweise falsch eingegebenen Rufnummern bei der Ortsermittlung verringert wird.

Beispielsweise kann die Auswerteeinheit das aufgezeichnete Kommunikationsverhalten auf der Grundlage der quantifizierenden Informationen auswerten und als ausgewertetes Kommunikationsverhalten zumindest eine Kommunikationsadresse ausgeben. Als ausgewertetes Kommunikationsverhalten können sich somit Adress- bzw. Rufnummernlisten ergeben, die unter Berücksichtigung von z.B. der Anzahl, der Zeitdauer oder der Häufigkeit einer jeweiligen Kommunikationsverbindung sortiert sind.

Beispielsweise kann die Orts-Ermittlungseinheit den zumindest einen Ort auf der Grundlage eines Regional-Codes der Kommunikationsadresse unter Verwendung einer Datenbank ermitteln. Auf diese Weise können beispielsweise die Vorwahlnummern von jeweiligen Rufnummern ihren jeweiligen geographischen Orten (Ländern, Gebieten, Städten usw.) zugeordnet werden, was eine Ortsermittlung stark vereinfacht.

Die Datenbank kann beispielsweise innerhalb oder außerhalb der Orts-Ermittlungseinheit angeordnet sein und insbesondere statische oder dynamisch aktualisierte Datensätze aufweisen. Demzufolge kann die Datenbank unmittelbar im Kommunikationsendgerät abgelegt sein und statische Datensätze aufweisen, was eine Geschwindigkeit bei der Ortsermittlung stark erhöht. Andererseits kann die Datenbank jedoch auch außerhalb beispielsweise auf einem Server im Internet angeordnet sein und dynamisch aktualisiert sein bzw. sogenannte Echtzeit-Datensätze aufweisen. Obwohl bei einer derartigen Realisierung jeweils ein Verbindungsaufbau zur Datenbank erforderlich ist, erhöht sich eine Genauigkeit für die Ortsermittlung auf Grund der verbesserten Aktualität.

Ferner kann die Orts-Ermittlungseinheit auch zumindest einen manuell eingegebenen Ort bereitstellen, wodurch weiterhin die Möglichkeit eines manuell eingegebenen Ortes für einen aufzurufenden ortsbezogenen Dienst besteht.

Vorzugsweise ist eine Konfigurationseinheit zum Konfigurieren des Kommunikationsendgeräts für einen ortsbezogenen Dienst auf der Grundlage des von der Orts-Ermittlungseinheit bereitgestellten zumindest einen Orts vorgesehen. Auf diese Wiese kann nicht nur ein jeweiliger Ort automatisch ermittelt, sondern gleichzeitig das Aufrufen eines ortsbezogenen Dienstes vereinfacht werden. Ein Benutzerkomfort wird dadurch weiter erhöht.

Bei den ortsbezogenen Diensten handelt es sich insbesondere um Wettervorhersagen oder um Lokalnachrichten.

Ferner kann die Vorrichtung im Kommunikationsendgerät implementiert sein und das Kommunikationsendgerät ein mobiles Endgerät darstellen. Insbesondere bei mobilen Endgeräten gemäß dem DECT-Standard, aber auch bei mobilen Endgeräten gemäß UMTS- oder GSM-Standard ergeben sich dadurch Verbesserungen für den Benutzerkomfort insbesondere bei der Anwahl von ortsbezogenen Diensten aus dem Internet.

Die Endgeräte sind bevorzugt personalisiert, was eine personenbezogene Ortsermittlung ermöglicht und somit einen Benutzerkomfort weiter erhöht.

Die Erfindung betrifft weiterhin ein Kommunikationsendgerät mit einer vorstehend genannten Vorrichtung. Dabei ist die Vorrichtung inklusive der Aufzeichnungseinheit zum Aufzeichnen des Kommunikationsverhaltens für das Kommunikationsendgerät; der Auswerteeinheit zum Auswerten des aufgezeichneten Kommunikationsverhaltens; und der Orts-Ermittlungseinheit zum Ermitteln von zumindest einem Ort auf der Grundlage des ausgewerteten Kommunikationsverhaltens im Kommunikationsendgerät implementiert.

In den weiteren Ansprüchen sind weitere vorteilhafte Ausgestaltungen der Erfindung gekennzeichnet.

Das erfindungsgemäße Verfahren zur Ortermittlung weist folgende Schritte auf: Aufzeichnen eines Kommunikationsverhaltens für ein Kommunikationsendgerät; Auswerten des aufgezeichneten Kommunikationsverhaltens; und Ermitteln von zumindest einem Ort auf der Grundlage des ausgewerteten Kommunikationsverhaltens.

Gemäß einer vorteilhaften Weiterbildung der Erfindung weist das Verfahren folgenden weiteren Schritt auf:
Konfigurieren des Kommunikationsendgeräts für einen ortsbezogenen Dienst auf der Grundlage des bei der Ortsermittlung bereitgestellten zumindest einen Ortes.

Gemäß einer weiteren vorteilhaften Weiterbildung der Erfindung ist vorgesehen, dass das aufgezeichnete Kommunikationsverhalten zumindest eine Kommunikationsadresse und eine zugehörige quantifizierende Information aufweist.

Insbesondere ist vorgesehen, dass die Kommunikationsadresse eine Rufnummer eines Kommunikationspartners aufweist.

Gemäß einer vorteilhaften Weiterbildung der Erfindung ist vorgesehen, dass die quantifizierende Information eine Zeitdauer der Kommunikationsverbindungen mit der Kommunikationsadresse angibt.

Gemäß einer weiteren vorteilhaften Weiterbildung der Erfindung ist vorgesehen, dass die quantifizierende Information eine Anzahl von Kommunikationsverbindungen mit der Kommunikationsadresse aufweist.

Mit Vorteil ist vorgesehen, dass die quantifizierende Information eine Häufigkeit von Kommunikationsverbindungen mit der Kommunikationsadresse aufweist.

Gemäß einer vorteilhaften Ausgestaltung der Erfindung ist vorgesehen, dass das aufgezeichnete Kommunikationsverhalten eine Information aufweist, die eine Unterscheidung zwischen eingehenden und ausgehenden Rufen ermöglicht.

Insbesondere ist vorgesehen, dass das aufgezeichnete Kommunikationsverhalten nur zustande gekommene Kommunikationsverbindungen aufweist.

Gemäß einer vorteilhaften Weiterbildung der Erfindung ist vorgesehen, dass im Auswerteschritt das ausgezeichnete Kommunikationsverhalten auf der Grundlage der quantifizierenden Information ausgewertet wird und als ausgewertetes Kommunikationsverhalten zumindest eine Kommunikationsadresse ausgegeben wird.

Gemäß einer weiteren vorteilhaften Weiterbildung der Erfindung ist vorgesehen, dass im Orts-Ermittlungsschritt der zumindest eine Ort auf der Grundlage eines Regional-Codes der Kommunikationsadresse unter Verwendung einer Datenbank ermittelt wird.

Insbesondere ist vorgesehen, dass die Datenbank statische oder dynamisch aktualisierte Datensätze aufweist.

Bevorzugt weist der ortsbezogene Dienst eine lokale Wettervorhersage oder lokale Nachrichten aus.

Schließlich ist bevorzugt vorgesehen, dass das Aufzeichnen des Kommunikationsverhaltens personalisiert ist.

Die Erfindung betrifft weiterhin ein digitales Speichermedium mit elektronisch auslesbaren Steuersignalen, die so mit einem Computersystem zusammenwirken können, dass ein vorstehend genanntes Verfahren ausgeführt wird.

Die Erfindung betrifft außerdem ein Computer-Programm-Produkt mit auf einem maschinenlesbaren Träger gespeichertem Programmcode zur Durchführung des vorstehend genannten Verfahrens, wenn das Programm auf einem Rechner abläuft.

Die Erfindung betrifft schließlich auch ein Computer-Programm mit Programmcode zur Durchführung des vorstehend genannten Verfahrens, wenn das Programm auf einem Computer abläuft.

Die Erfindung wird nachstehend anhand von Ausführungsbeispielen unter Bezugnahme auf die Zeichnung näher beschrieben.

Es zeigen:
Figur 1 eine vereinfachte Blockdarstellung einer Vorrichtung zur Ortsermittlung für ortsbezogene Dienste gemäß der vorliegenden Erfindung;
Figur 2 eine tabellarische Darstellung des aufgezeichneten Kommunikationsverhaltens gemäß der vorliegenden Erfindung; und
Figur 3 ein vereinfachtes Flussdiagramm zur Veranschaulichung eines erfindungsgemäßen Verfahrens zur Ortsermittlung für ortsbezogene Dienste.

Die vorliegende Erfindung wird nachfolgend beispielhaft anhand eines Schnurlostelefons gemäß DECT-Standard (Digital European Cordless Telecommunications) oder dem CAT-iq (Cordless Advanced Technology - internet and quality) als Kommunikationsendgerät bzw. mobiles Endgerät beschrieben, welches eine besonders benutzerfreundliche Art und Weise bei der Ortsermittlung für ortsbezogene Dienste bereitstellt. Selbstverständlich kann die Erfindung in gleicher Weise auch auf weitere elektronische Geräte wie beispielsweise Mobiltelefone, PDAs (Personal Digital Assistant), Smartphones oder sonstige Geräte wie beispielsweise drahtgebundene Kommunikationsendgeräte angewendet werden, in denen eine Ortsermittlung für ortsbezogene Dienste durchgeführt werden kann.

Die Erfindung macht sich hierbei den Umstand zu Nutze, dass üblicherweise Kommunikationsendgeräte wie beispielsweise Telefone die Rufnummern bzw. Kommunikationsadressen aller eingehenden und ausgehenden Rufe bzw. Verbindungen und Verbindungsversuche in einer sogenannten Anruferliste (Call Log List, CLL) abgelegt werden. Oft werden dabei auch eine Anzahl und/oder eine Zeitdauer der jeweiligen Verbindungen protokolliert.

Ausgehend von der Annahme, dass ein jeweiliger Benutzer eines Kommunikationsendgeräts bzw. Telefons zu den geographischen Orten, in denen sich z.B. die am häufigsten kontaktierten Kommunikationspartner befinden, einen besonderen sozialen Bezug hat, wird erfindungsgemäß aus dem Telefonieverhalten bzw. Kommunikationsverhalten des Nutzers ein Ortsbezug des Nutzers hergestellt. Vereinfacht werden hierbei z.B. aus der Anruferliste des Telefons die Vorwahlnummern extrahiert, die einen Ortsbezug ermöglichen und beispielsweise nach der Häufigkeit ihres Auftretens und/oder der Zeitdauer sortiert. Anschließend werden beispielsweise die Vorwahlnummern jeweils einem geographischen Ort derart zugeordnet, dass eine Liste von geographischen Orten entsteht, zu denen der Benutzer des Telefons häufig oder über einen größeren Zeitraum Kontakt hat. Diese Ortsliste kann anschließend dazu verwendet werden, um ortsbezogene Dienste automatisch für das Endgerät zu konfigurieren. Die Zuordnung der Vorwahlnummern zu den entsprechenden Orten kann hierbei sowohl unmittelbar im Endgerät oder aber extern z.B. beim Dienstanbieter eines ortsbezogenen Dienstes stattfinden.

Somit ist keine manuelle Eingabe des geographischen Orts für die Nutzung von ortsbezogenen Diensten nötig, weshalb ein Benutzerkomfort wesentlich erhöht ist. Vielmehr erhält der Benutzer automatisch Informationen (z.B. Wettervorhersage) zu den Orten, für die er sich mit hoher Wahrscheinlichkeit interessiert, da hier offensichtlich ein Großteil seines sozialen Umfelds lebt.

Insbesondere kann das Verfahren für die Konfiguration von Internetdiensten verwendet werden, die abwechselnd oder gleichzeitig Informationen von verschiedenen Orten anbieten. Hierbei wird insbesondere auf derartige Endgeräte verwiesen, welche bereits einen automatisierten Dienstabruf aufweisen, um beispielsweise eine aktuelle Wettervorhersage auf einem Schnurlostelefon im Stand-by-Modus anzuzeigen. Erfindungsgemäß können derartige Diensteaufrufe nunmehr entsprechend der Ortsliste der z.B. am häufigsten kontaktierten geographischen Orte vorkonfiguriert oder automatisiert werden. Ferner kann die Konfiguration von anderen ortsbezogenen Diensten (z.B. Pizza Service) erleichtert werden, indem für die Auswahl des Ortes eine auf die Telefonkontakte des Nutzers zugeschnittene Vorschlagsliste angeboten wird. Wenn genügend Telefonkontakte des Nutzers auf den eigenen Wohnort entfallen (was üblicherweise der Fall ist), so wird eine derartige Vorschlagsliste auch den Wohnort des Benutzers enthalten und eine manuelle Ortseingabe kann entfallen.

Das Verfahren ist somit grundsätzlich auch für Mobiltelefone anwendbar, da es nicht auf die eigene Rufnummer des mobilen Endgeräts angewiesen ist, sondern die Kommunikationsadressen bzw. Rufnummern seiner Kommunikationspartner berücksichtigt.

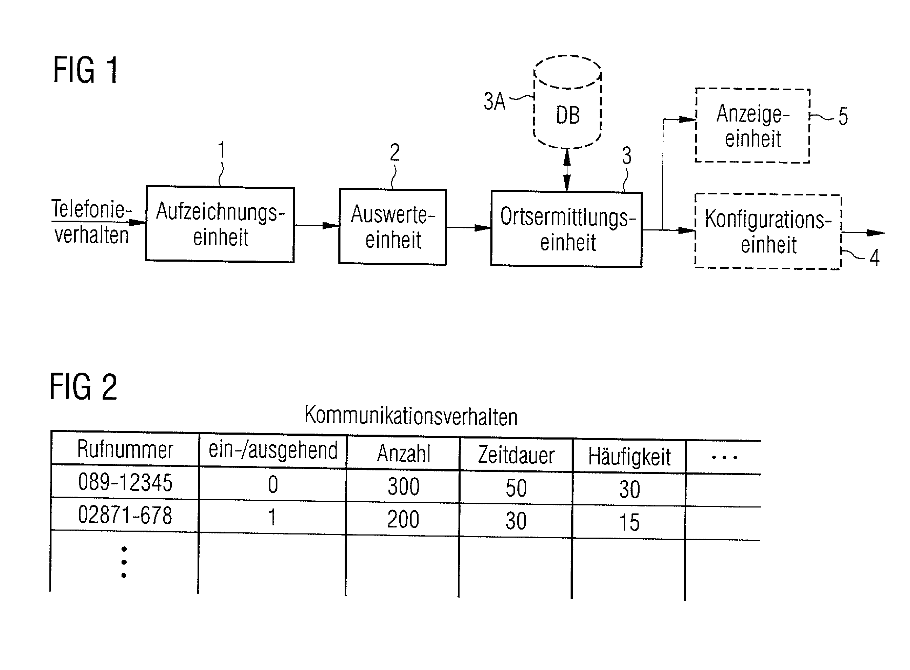

Figur 1 zeigt eine vereinfachte Blockdarstellung einer Vorrichtung zur Ortsermittlung für ortsbezogene Dienste, wie sie in einem Kommunikationsendgerät, wie beispielsweise einem Schnurlostelefon oder einem Mobiltelefon, implementiert sein kann. Die Vorrichtung gemäß Figur 1 kann jedoch auch zumindest zum Teil außerhalb des Kommunikationsendgeräts verwirklicht sein, und sich auf jeweiligen (nicht dargestellten) Rechnern oder Servern im Internet oder an sonstigen Stellen eines Telekommunikationsnetzes befinden.

Gemäß Figur 1 weist die Vorrichtung zur Ortsermittlung eine Aufzeichnungseinheit 1 zum Aufzeichnen eines Kommunikationsverhaltens für ein Kommunikationsendgerät auf. Das Kommunikationsverhalten ist beispielsweise ein Telefonieverhalten eines Benutzers mit einem Telekommunikationsendgerät, z.B. Schnurlostelefon oder Mobiltelefon. Die Aufzeichnungseinheit ist üblicherweise in einer Vielzahl von Endgeräten ohnehin vorhanden und speichert beispielsweise die Kommunikationsadressen und zugehörige quantifizierende Informationen.

Figur 2 zeigt eine vereinfachte tabellarische Darstellung eines derart aufgezeichneten Kommunikationsverhaltens, wie es beispielsweise in einer erweiterten Anruferliste bzw. Call Log List (CLL) abgelegt sein kann. Gemäß Figur 2 wird hierbei einer vorbestimmten Kommunikationsadresse, wie beispielsweise einer Rufnummer, eine Vielzahl von quantifizierenden Informationen zugeordnet. Die quantifizierenden Informationen können beispielsweise eine absolute Anzahl von Kommunikationsverbindungen mit der zugehörigen Kommunikationsadresse bzw. Rufnummer enthalten. Ferner kann als quantifizierende Information eine Zeitdauer der Kommunikationsverbindungen mit der zugehörigen Kommunikationsadresse bzw. Rufnummer abgespeichert werden. Darüber hinaus ist gemäß Figur 2 eine Häufigkeit von Kommunikationsverbindungen mit der jeweiligen Kommunikationsadresse angegeben, wobei sich die Häufigkeit beispielsweise auf einen vorbestimmten Zeitraum, wie beispielsweise einen Tag, eine Woche, ein Monat oder ein Jahr, beziehen kann.

Selbstverständlich können auch weitergehende quantifizierende Informationen zu einer jeweiligen Kommunikationsadresse bzw. Rufnummer in der Tabelle gemäß Figur 2 abgelegt sein.

Beispielsweise kann gemäß Figur 2 auch eine zusätzliche Information in der Tabelle für das aufgezeichnete Kommunikationsverhalten enthalten sein, die eine Unterscheidung zwischen eingehenden und ausgehenden Rufen ermöglicht. Eine weitere (nicht dargestellte) Information im aufgezeichneten Kommunikationsverhalten gemäß Figur 2 kann ferner das tatsächliche Zustandekommen einer Kommunikationsverbindung anzeigen, wodurch auch zwischen zustande gekommenen und nicht zustande gekommenen Kommunikationsverbindungen bzw. Telefonaten unterschieden werden kann.

Das in Figur 2 dargestellte aufgezeichnete Kommunikationsverhalten bietet eine Vielzahl von Auswertemöglichkeiten, die durch eine Auswerteeinheit 2 gemäß Figur 1 ausgewertet werden können. Beispielsweise kann die Auswerteeinheit 2 die in Figur 2 dargestellte Liste bestehend aus Kommunikationsadresse und zugehörigen quantifizierenden Informationen auf der Grundlage der quantifizierenden Informationen auswerten und als ausgewertetes Kommunikationsverhalten zumindest eine Kommunikationsadresse bzw. Rufnummer ausgeben. Beispielsweise kann eine Häufigkeit von Kommunikationsverbindungen bei der Auswertung in der Auswerteeinheit 2 berücksichtigt werden. In diesem Fall könnte z.B. die Rufnummer ausgegeben werden, welche am häufigsten innerhalb eines bestimmten Zeitraums genutzt wurde. In gleicher Weise kann jedoch auch eine Zeitdauer bei der Auswertung in der Auswerteeinheit 2 berücksichtigt werden, wobei als ausgewertetes Kommunikationsverhalten die Rufnummer mit der in Summe am längsten Kommunikations-Zeitdauer ausgegeben wird. Ferner kann in ähnlicher Weise eine absolute Anzahl von Kommunikationsverbindungen bei der Auswertung in der Auswerteeinheit 2 berücksichtigt werden und als Ergebnis die Rufnummer mit der höchsten Anzahl ausgewertet werden.

Zur Erhöhung eines Benutzerkomforts und zur Erweiterung einer Auswahlmöglichkeit wird üblicherweise nicht nur eine Kommunikationsadresse bzw. Rufnummer als ausgewertetes Kommunikationsverhalten von der Auswerteeinheit ausgegeben, sondern eine beispielsweise für eine Anzeigeeinheit 5 angepasste Vielzahl von Kommunikationsadressen bzw. Rufnummern. Vorzugsweise wird eine derartige Liste hinsichtlich der verschiedenen Kriterien sortiert, wobei für den Fall einer Auswertung nach Häufigkeit die drei oder fünf häufigsten Rufnummern für die weitere Verarbeitung sortiert bereitgestellt werden.

Darüber hinaus kann die Auswerteeinheit 2 die Rufnummern nicht nur nach einer der quantifizierenden Informationen auswerten sondern auch durch deren Kombination und gegebenenfalls anhand einer vorbestimmten Regel. Ferner ist eine Gewichtung der jeweiligen quantifizierenden Informationen bei der Auswertung möglich. Demzufolge können alle quantifizierenden Informationen bei der Auswertung in der Auswerteeinheit 2 nach einem vorbestimmten Muster bzw. einer vorgegebenen Regel berücksichtigt werden. Insbesondere können hierbei nicht zustande gekommene Kommunikationsverbindungen unberücksichtigt bleiben und nur die zustande gekommenen Kommunikationsverbindungen bei der weiteren Auswertung berücksichtigt werden, wodurch sich eine fehlerhafte Ortsermittlung verringern lässt. Grundsätzlich kann bereits die Aufzeichnungseinheit 1 nur die zustande gekommenen Kommunikationsverbindungen aufzeichnen, wodurch bereits in der Aufzeichnungseinheit 1 eine Beschränkung bzw. Filterung hinsichtlich der Auswertemöglichkeiten erfolgt.

Gemäß Figur 1 wird die von der Auswerteeinheit 2 ausgegebene Kommunikationsadresse oder Liste von Kommunikationsadressen bzw. Rufnummern einer Orts-Ermittlungseinheit 3 zugeführt, welche auf der Grundlage des ausgewerteten Kommunikationsverhaltens zumindest einen geographischen Ort ermittelt. Gemäß Figur 1 kann die Orts-Ermittlungseinheit 3 den zumindest einen Ort auf der Grundlage eines Regional-Codes der Kommunikationsadresse unter Verwendung einer Datenbank 3A ermitteln.

Wenn beispielsweise eine Liste von Rufnummern als ausgewertetes Kommunikationsverhalten der Orts-Ermittlungseinheit 3 zugeführt wird, so können beispielsweise in der Orts-Ermittlungseinheit die Regional-Codes, wie z.B. die Vorwahlnummern der jeweiligen Rufnummern bzw. Rufnummernlisten, extrahiert werden und mit einer Zuordnungstabelle, welche in der Datenbank 3A abgelegt ist, ausgewertet werden. Die Datenbank 3A kann hierbei beispielsweise für jede Länder-Vorwahl den Namen eines jeweiligen Landes (z.B. Deutschland, Frankreich, Italien usw.) enthalten. In gleicher Weise kann die Datenbank 3A auf der Grundlage der Vorwahlnummern auch sogenannte Regionen ermitteln, welche beispielsweise kleinere geographische Gebiete und insbesondere Städten zugeordnet sind. Demzufolge kann die Vorwahlnummer "089" der Stadt München und die Vorwahlnummer "02871" der Stadt Bocholt in der Datenbank 3A zugeordnet sein. In ähnlicher Weise können auch die Vorwahlnummern bzw. Regional-Codes von internationalen Rufnummern extrahiert und ausgewertet werden, wodurch man für eine vorbestimmte Rufnummer oder eine vorbestimmte Rufnummernliste jeweils zugehörige Städte, Regionen, Bundesländer oder Länder erhalten kann. Der so ermittelte geographische Ort wird anschließend von der Orts-Ermittlungseinheit 3 zur weiteren Verarbeitung bereitgestellt. Im Falle einer der Orts-Ermittlungseinheit 3 zugeführten Vielzahl von Kommunikationsadressen bzw. Rufnummern wird entsprechend eine Liste von Orten mit gleicher Sortierung bzw. Priorisierung wie in der eingehenden Rufnummernliste als geographische Ortsliste bereitgestellt.

Diese von der Orts-Ermittlungseinheit 3 bereitgestellte Ortsliste bzw. der ermittelte Ort kann anschließend der Anzeigeeinheit 5 zugeführt werden, die eine Benutzerauswahl bzw. Bestätigung durch den Benutzer ermöglicht. Beispielsweise kann unter Berücksichtigung der durch die Auswerteeinheit 2 vorgenommenen Sortierung eine entsprechend sortierte Ortsliste in der Anzeigeeinheit 5 ausgegeben werden, wobei beispielsweise der geographische Ort zu der am häufigsten genutzten Rufnummer ganz oben in der Liste steht und nachfolgend die Orte mit verringerter Häufigkeit angezeigt werden. Ein Benutzer kann nunmehr unter Verwendung einer nicht näher beschriebenen Menüführung einen jeweiligen Ort für einen jeweiligen ortsbezogenen Dienst auswählen.

Beispielsweise kann der Benutzer in der Anzeigeeinheit 5 dazu aufgefordert werden den Ort für die Wettervorhersage, die Lokalnachrichten oder einen Pizza-Service auszuwählen. Darüber hinaus kann zu diesem Zeitpunkt die Möglichkeit bestehen, dass ein Benutzer aufgefordert wird einen zusätzlichen Ort manuell einzugeben. In diesem Fall wird über eine nicht dargestellte Eingabeschnittstelle der Orts-Ermittlungseinheit 3 ein manuell eingegebener Ort zugeführt und zusätzlich zur automatisch erstellen Ortsliste an der Anzeigeeinheit 5 ausgegeben.

Nach Auswahl des Ortes in der Anzeigeeinheit 5 kann dieser Ort einer Konfigurationseinheit 4 zum Konfigurieren des Kommunikationsendgeräts für einen ortsbezogenen Dienst auf der Grundlage des von der Orts-Ermittlungseinheit 3 bereitgestellten zumindest einen Ortes freigeschaltet werden. Diese Freigabe über die Anzeigeeinheit 5 kann jedoch auch entfallen. Die detaillierte Funktionsweise der Konfigurationseinheit 4 wird nachfolgend nicht näher beschrieben, da sie bereits in einer Vielzahl von herkömmlichen Schnurlostelefonen verwirklicht ist und beispielsweise die vorkonfigurierte Ausgabe einer Wettervorhersage über die Anzeigeeinheit 5 in einem Stand-by-Modus ermöglicht. Die Konfigurationseinheit 4 umfasst hierbei die Konfiguration des Kommunikationsendgeräts zur Realisierung einer IP-Verbindung zu einem jeweiligen ortsbezogenen Dienst unter Berücksichtigung der vorhandenen Telekommunikationsschnittstellen und des gewünschten Ortes. Beispielsweise können als ortsbezogene Dienste lokale Wettervorhersagen oder Lokalnachrichten aufgerufen werden. Es können jedoch auch sonstige ortsbezogene Dienste wie beispielsweise ein Pizza-Service oder die in der Umgebung befindlichen Tankstellen usw. angezeigt werden.

Die Erfindung wurde vorstehend anhand eines drahtlosen Endgeräts bzw. Schnurlostelefons beschrieben, in der die Vorrichtung zur Ortsermittlung gemäß Figur 1 vollständig implementiert ist. Grundsätzlich können insbesondere die Blöcke Auswerteeinheit 2, Orts-Ermittlungseinheit 3, Datenbank 3A und Konfigurationseinheit 4 auch außerhalb des Kommunikationsendgeräts angeordnet und insbesondere bei einem jeweiligen Dienstanbieter realisiert sein. Grundsätzlich kann auch die Aufzeichnungseinheit 1 außerhalb des Kommunikationsendgeräts realisiert sein und sich beispielsweise in einer Vermittlungsstelle befinden.

Die Datenbank 3A kann neben den statischen Datensätzen auch dynamisch aktualisierte Datensätze aufweisen und insbesondere bei einer ausgelagerten Realisierung sogenannte Echtzeit-Datensätze beinhalten. Auf diese Weise können die für die Ortsermittlung zur Verfügung stehenden Datensätze jeweils auf den neuesten Stand gebracht werden. Insbesondere bei Verwendung von sogenannten personalisierten Kommunikationsendgeräten, wobei ein jeweiliges Endgerät von einer Vielzahl von Benutzern verwendet werden kann, besteht die Möglichkeit, auch die erfindungsgemäße Ortsermittlung zu personalisieren. Vorzugsweise wird hierbei lediglich die Aufzeichnungseinheit 1 personalisiert, um jeweils nur das Telefonieverhalten für einen Benutzer aufzuzeichnen und für die Ortsermittlung bereitzustellen. Auf diese Weise können auch bei Verwendung eines Kommunikationsendgeräts durch eine Gruppe von unterschiedlichen Benutzern jeweils personalisierte Ortsermittlungen für ortsbezogene Dienste realisiert werden, wodurch sich ein Benutzerkomfort weiter erhöht.

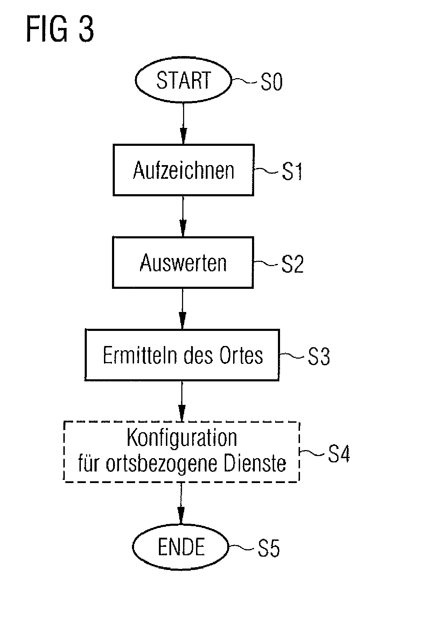

Figur 3 zeigt ein vereinfachtes Flussdiagramm zur Veranschaulichung von Verfahrensschritten des erfindungsgemäßen Verfahrens zur Ortsermittlung für ortsbezogene Dienste.

Nach einem Start in Schritt S0 wird in einem Schritt S1 ein Aufzeichnen eines Kommunikationsverhaltens für ein Kommunikationsendgerät durchgeführt, wobei beispielsweise die in Figur 2 dargestellten Informationen aufgezeichnet werden. In einem Schritt S2 wird das so aufgezeichnete Kommunikationsverhalten des Kommunikationsendgeräts ausgewertet, wobei beispielsweise die vorstehend beschriebene Auswertung insbesondere gemäß einer Häufigkeit, Zeitdauer und/oder Anzahl von Kommunikationsverbindungen mit einem jeweiligen Kommunikationspartner bzw. dessen zugehöriger Kommunikationsadresse (Rufnummer) berücksichtigt wird. In einem Schritt S3 wird anschließend auf der Grundlage des ausgewerteten Kommunikationsverhaltens bzw. der ausgegebenen Kommunikationsadresse oder Liste von Kommunikationsadressen zumindest ein geographischer Ort ermittelt, wobei, wie vorstehend beschrieben wurde, unter Verwendung der Datenbank 3A und auf der Grundlage eines Regional-Codes bzw. der Vorwahlnummer einer jeweiligen Kommunikationsadresse bzw. Rufnummer zumindest ein geographischer Ort ermittelt wird. Vorzugsweise kann eine ganze Liste von Orten ermittelt werden, die der Liste von ausgewerteten Rufnummern entsprechen und entsprechend sortiert sind. In einem Schritt S4 kann das Kommunikationsendgerät nunmehr für einen ortsbezogenen Dienst auf der Grundlage des von der Orts-Ermittlungseinheit bereitgestellten zumindest einen Orts automatisch oder nach Benutzerbestätigung konfiguriert werden, wobei das Verfahren in einem Schritt S5 endet. Optional kann in einem (nicht dargestellten) Schritt eine Anzeige der ermittelten Orte durchgeführt werden und ferner eine (nicht dargestellte) Auswahl eines vorbestimmten Orts aus der Liste durchgeführt werden, auf dessen Grundlage die Konfiguration für den ortsbezogenen Dienst durchgeführt wird. Die jeweiligen Verfahrensschritte entsprechen hierbei den vorstehend beschriebenen Vorgehensweisen, wie sie anhand der Figuren 1 und 2 beschrieben wurden.

Die Figur 3 zeigt folglich ein Flussdiagramm für ein Verfahren und ein Computer-Programm-Produkt gemäß der vorliegenden Erfindung. Es sei darauf hingewiesen, dass jeder Block oder Schritt des Flussdiagramms und jeweilige Kombinationen von Blöcken im Flussdiagramm durch Computer-Programm-Befehle implementiert sein können. Diese Computer-Programm-Befehle können auf einen Computer oder ein anderes programmierbares Gerät geladen werden, um eine Vorrichtung zu erzeugen, wobei die im Computer oder einem anderen programmierbaren Gerät ausgeführten Befehle Mittel zum Implementieren der Funktionsweisen erzeugen, wie sie in den Schritten des Flussdiagramms dargestellt sind. Diese Computer-Programm-Befehle können ebenfalls in einem digitalen Speichermedium, wie beispielsweise einer DVD, CD oder Diskette gespeichert sein, die einen Computer oder ein anderes programmierbares Gerät zur Realisierung einer bestimmten Funktionalität anweist. Darüber hinaus können die Computer-Programm-Befehle bzw. der Programm-Code in beispielsweise einem Telekommunikationsnetzwerk heruntergeladen werden, um Betriebsschritte hervorzurufen, die auf einem Computer oder einem anderen programmierbaren Gerät ausgeführt werden, um einen computer-implementierten Prozess zu erzeugen, der die Durchführung der Verfahrensschritte gemäß Figur 3 ermöglicht.

Die Erfindung umfasst daher ferner ein digitales Speichermedium mit elektronisch auslesbaren Steuersignalen, die so mit einem Computer-System zusammenwirken können, dass sie die Verfahrensschritte gemäß Figur 3 ausführen können. Ferner bezieht sich die Erfindung auf ein Computer-Programm-Produkt mit auf einem maschinenlesbaren Träger gespeicherten Programm-Code zur Durchführung der Verfahrensschritte nach Figur 3, wenn das Programm auf einem Rechner abläuft. Im Übrigen betrifft die vorliegende Erfindung ein Computer-Programm mit Programm-Code zur Durchführung von Verfahrensschritten nach Figur 3, wenn das Programm auf einem Computer abläuft.

Die Erfindung wurde vorstehend anhand eines Schnurlostelefons gemäß DECT-Standard beschrieben. Sie ist jedoch nicht darauf beschränkt und umfasst in gleicher Weise auch weitere Kommunikationsendgeräte wie beispielsweise Mobiltelefone oder schnurgebundene Kommunikationsendgeräte in denen die Ermittlung eines Orts für einen ortsbezogenen Dienst auf der Grundlage eines Kommunikationsverhaltens durchgeführt wird.

### Bezugszeichenliste

- 1: Aufzeichnungseinheit
- 2: Auswerteeinheit
- 3: Orts-Ermittlungseinheit
- 4: Konfigurationseinheit
- 5: Anzeigeeinheit
- 3A: Datenbank
- S0 bis S5: Verfahrensschritte

## Patentansprüche

1. Vorrichtung zur Ortsermittlung mit:
einer Aufzeichnungseinheit (1) zum Aufzeichnen eines Kommunikationsverhaltens für ein Kommunikationsendgerät;
einer Auswerteeinheit (2) zum Auswerten des aufgezeichneten Kommunikationsverhaltens; und
einer Orts-Ermittlungseinheit (3) zum Ermitteln von zumindest einem Ort auf der Grundlage des ausgewerteten Kommunikationsverhaltens.

2. Vorrichtung nach Patentanspruch 1,
**dadurch gekennzeichnet, dass** das aufgezeichnete Kommunikationsverhalten zumindest eine Kommunikationsadresse und eine zugehörige quantifizierende Information aufweist.

3. Vorrichtung nach Patentanspruch 2,
**dadurch gekennzeichnet, dass** die Kommunikationsadresse eine Rufnummer eines Kommunikationspartners angibt.

4. Vorrichtung nach Patentanspruch 2 oder 3,
**dadurch gekennzeichnet, dass** die quantifizierende Information eine Anzahl von Kommunikationsverbindungen mit der Kommunikationsadresse angibt.

5. Vorrichtung nach einem der Patentansprüche 2 bis 4,
**dadurch gekennzeichnet, dass** die quantifizierende Information eine Zeitdauer der Kommunikationsverbindungen mit der Kommunikationsadresse angibt.

6. Vorrichtung nach einem der Patentansprüche 2 bis 5,
**dadurch gekennzeichnet, dass** die quantifizierende Information eine Häufigkeit von Kommunikationsverbindungen mit der Kommunikationsadresse angibt.

7. Vorrichtung nach einem der Patentansprüche 1 bis 6,
**dadurch gekennzeichnet, dass** das aufgezeichnete Kommunikationsverhalten eine Information aufweist, die eine Unterscheidung zwischen eingehenden und ausgehenden Rufen ermöglicht.

8. Vorrichtung nach einem der Patentansprüche 1 bis 7,
**dadurch gekennzeichnet, dass** das aufgezeichnete Kommunikationsverhalten nur zustande gekommene Kommunikationsverbindungen aufweist.

9. Vorrichtung nach einem der Patentansprüche 2 bis 8,
**dadurch gekennzeichnet, dass** die Aufzeichnungseinheit (2) das aufgezeichnete Kommunikationsverhalten auf der Grundlage der quantifizierenden Information auswertet und als ausgewertetes Kommunikationsverhalten zumindest eine Kommunikationsadresse ausgibt.

10. Vorrichtung nach einem der Patentansprüche 2 bis 9,
**dadurch gekennzeichnet, dass** die Orts-Ermittlungseinheit (3) den zumindest einen Ort auf der Grundlage eines Regional-Codes der Kommunikationsadresse unter Verwendung einer Datenbank (3A) ermittelt.

11. Vorrichtung nach Patentanspruch 10,
**dadurch gekennzeichnet, dass** die Datenbank (3A) innerhalb oder außerhalb der Orts-Ermittlungseinheit (3) angeordnet ist.

12. Vorrichtung nach Patentanspruch 10 oder 11,
**dadurch gekennzeichnet, dass** die Datenbank (3A) statische oder dynamisch aktualisierte Datensätze aufweist.

13. Vorrichtung nach einem der Patentansprüche 1 bis 12,
**dadurch gekennzeichnet, dass** die Orts-Ermittlungseinheit (3) ferner zumindest einen manuell eingebbaren Ort bereitstellt.

14. Vorrichtung nach einem der Patentansprüche 1 bis 13,
**gekennzeichnet durch** eine Konfigurationseinheit (4) zum Konfigurieren des Kommunikationsendgeräts für einen ortsbezogenen Dienst auf der Grundlage des von der Orts-Ermittlungseinheit (3) bereitgestellten zumindest einen Ortes.

15. Vorrichtung nach einem der Patentansprüche 1 bis 14,
**dadurch gekennzeichnet, dass** das Kommunikationsendgerät ein mobiles Endgerät, insbesondere gemäß DECT-Standard, aufweist.

16. Kommunikationsendgerät mit einer Vorrichtung nach einem der Patentansprüche 1 bis 15.

17. Verfahren zur Ortermittlung mit den Schritten:
Aufzeichnen (S1) eines Kommunikationsverhaltens für ein Kommunikationsendgerät; Auswerten (S2) des aufgezeichneten Kommunikationsverhaltens; und
Ermitteln von zumindest einem Ort (S3) auf der Grundlage des ausgewerteten Kommunikationsverhaltens.

18. Verfahren nach Patentanspruch 17 mit dem weiteren Schritt:
Konfigurieren des Kommunikationsendgeräts für einen ortsbezogenen Dienst auf der Grundlage des bei der Ortsermittlung bereitgestellten zumindest einen Ortes.
